# EUROPEAN PATENT APPLICATION

(11) **EP 2 493 160 A1**
(43) Date of publication of application: **29.08.2012**
(21) Application number: 11155824.3
(22) Date of filing: 24.02.2011
(51) Int. Cl.: H04M 1/725, H04M 1/2745

(54) **Communication system providing data transfer direction determination based upon orientation and related methods**

(71) Applicant: Research In Motion Limited, Waterloo, ON N2L 3W8 (CA)
(72) Inventor: Moosavi, Vahid, Waterloo Ontario N2L 3W8 (CA); Walker, David Ryan, Waterloo Ontario N2L 3L3 (CA); Orr, Kevin Howard, Waterloo Ontario N2L 3W8 (CA)
(74) Representative: Hibbert, Juliet Jane Grace

(57) **Abstract**

A communication system may include at least one electronic device configured to wirelessly communicate via a Near-Field Communication (NFC) format, and at least one mobile communications device. The at least one mobile communications device may include an NFC device configured to wirelessly communicate with the at least one electronic device via the NFC format, and a controller coupled with the NFC device. The controller may be configured to determine an orientation of the at least mobile communications device, and determine a direction of communication with respect to the at least one electronic device based upon the determined orientation.

## Description

### Technical Field

This application relates generally to the field of communications, and more particularly, to electronic devices and related methods that use near-field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a schematic block diagram of a communication system in accordance with one example aspect.

FIG. 2 is schematic block diagram of an alternative embodiment of the system of FIG. 1.

FIGS. 3 and 4 are flow diagrams illustrating method aspects associated with the systems of FIGS. 1 and 2.

FIGS. 5 through 8 are front elevational views of example mobile wireless communications devices of the system of FIG. 2 illustrating various use cases.

FIG. 9 is a schematic block diagram illustrating example components that may be used with the mobile wireless communications devices of FIGS. 1, 2 and 5-8.

FIG. 10 is a side view of the mobile wireless communications devices shown in FIGS. 5 and 6.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally, a communication system is disclosed herein which may include at least one electronic device configured to wirelessly communicate via a Near-Field Communication (NFC) format, and at least one mobile communications device. The mobile communications device may include an NFC device configured to wirelessly communicate with the at least one electronic device via the NFC format, and a controller coupled with the NFC device. The controller may be configured to determine an orientation of the at least one mobile communications device, and determine a direction of communication with respect to the at least one electronic device based upon the determined orientation. As such, the orientation of the mobile communications device may advantageously be used to determine whether transmitting data (e.g., digital content data) to, receiving data from, or exchanging data with, the electronic device is appropriate.

More particularly, the at least one mobile communications device may further comprise an orientation detection sensor coupled with the controller, and the controller may be further configured to determine the orientation of the at least one mobile communications device based upon the orientation detection sensor. The orientation detection sensor may comprise an accelerometer, an optical sensor, a gyroscope and/or a magnetometer. The controller may also be configured to cause the NFC device to transmit and/or receive digital content data to the at least one electronic device based upon determined orientation of the at least one mobile communications device.

The at least one mobile communications device may further comprise a housing carrying the NFC device and the controller, and a display carried by the housing. The controller may be configured to cause the NFC device to transmit digital content data to the at least one electronic device when the determined orientation of the at least one mobile communications device includes the display facing substantially upward, for example. The controller may be configured to cause the NFC device to receive digital content data from the at least one electronic device when the determined orientation of the at least one mobile communications device includes the display facing substantially downward, for example.

The controller may be further configured to determine an impact to the housing, and to cause the NFC device to exchange digital content data with the at least one electronic device based upon the determined impact to the housing. The at least one electronic device may be further configured to determine an orientation thereof, and the at least one electronic device and the controller are configured to exchange digital content data therebetween based upon the respective determined orientations. The controller may be further configured to determine the orientation of the mobile communications device and the direction of communication prior to establishing NFC communications with the at least one electronic device.

Also, the mobile communications device may further comprise a wireless transceiver carried by the housing, with the wireless transceiver being configured to communicate via a wireless communications network.

A related mobile communications device, such as the one described briefly above, and a related communication method are also provided. The method may include determining an orientation of the at least one mobile communications device, and determining a direction of communication with respect to the at least one electronic device based upon the determined orientation.

A non-transitory computer-readable medium for a mobile communications device, such as the one described briefly above, is also provided. The non-transitory computer-readable medium may have computer executable instructions for causing the mobile communications device to perform steps comprising determining an orientation of the at least one mobile communications device, and determining a direction of communication with respect to the at least one electronic device based upon the determined orientation.

By way of background, mobile communications devices (also referred to as "mobile devices" herein), such as portable cellular telephones, etc. are being equipped with short-range communications capabilities (e.g., NFC) to enable near field communication of information or data between mobile devices as well as other electronic devices (e.g., NFC tags, etc.). Data such as digital content data (e.g., electronic files, etc.) stored in the memory of one mobile device may be transmitted to another mobile device (or other electronic device, etc.) via NFC communications, or such data may be exchanged between the devices.

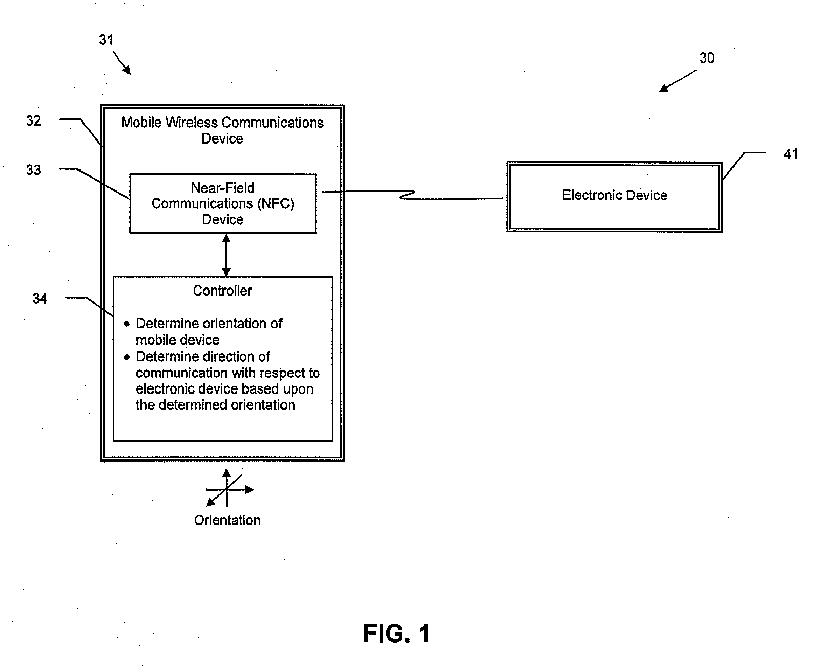

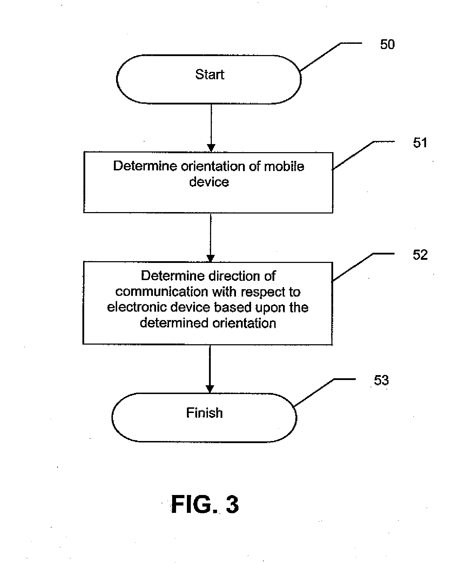

Referring initially to FIGS. 1 and 3, a communication system 30 illustratively includes an electronic device 41 which is configured to communicate via a short-range communications format (e.g., NFC). The system 30 further illustratively includes a mobile device 31 which includes a portable housing 32, a NFC device 33 carried by the portable housing 32 and configured to communicate via the NFC format, and a controller 34 carried by the portable housing 32 and coupled to the NFC device 33.

NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

By way of example, various mobile devices that may be used for the embodiments described herein include portable or personal media players (e.g., MP3 players, video players, etc.), remote controls (e.g., television or stereo remotes, etc.), portable gaming devices, portable or mobile telephones, smartphones, tablet computers, etc. Furthermore, the controller **34** may be implemented using a combination of hardware (e.g., microprocessor, etc.) and non-transitory computer-readable medium components having computer-executable instructions for performing the various operations described herein. Moreover, the electronic device **41** may also be a mobile device, although it may be stationary or otherwise intended not to be readily portable, such as a television, stereo, desktop computer, etc. In some embodiments, the electronic device may comprise an NFC tag (e.g., a poster tag, etc.), for example.

Referring also to the flowchart in FIG. 3, beginning at Block **50,** the controller **34** may be configured to communicate with the electronic device **41** via the NFC device **33** when in proximity therewith. The controller **34** is further configured to determine an orientation of the mobile device **31,** at Block **51,** and to determine a direction of communication with respect to the electronic device **41** based upon the determined orientation, at Block **52,** which concludes the method illustrated in FIG. 3 (Block **53).** As such, it may advantageously be determined if the mobile device **31** is attempting to transmit data (e.g., digital content data) to the electronic device **41,** receive data therefrom, or both (i.e., to exchange data therewith). In other words, by "direction of communication" it is meant which way digital content data is "flowing", i.e., from the mobile device **31** to the electronic device **41,** from the electronic device **41** to the mobile device **31,** or both. In certain embodiments, the controller **34** is further configured to determine the orientation and the direction of communication prior to establishing NFC communications with the at least one electronic device **41.** This may be advantageous to avoid conflicts during the NFC negotiations between devices, e.g. in establishing transmission and reception modes.

By way of example, the digital content data may include contacts (e.g., digital business cards), audio, video, images, addresses or appointments, documents, applications, financial information, security information, etc.

In the present example, the mobile device **31** may have an upward orientation relative to the electronic device **41** which is stationary. As such, the controller **34** determines that it should be transmitting data to the electronic device **41** due to the orientation of the mobile device **31.** On the other hand, if the controller **34** determines that the mobile device has a downward orientation as the portable housing **32** is being bumped with (i.e., impacted) the electronic device **41** or at the time when NFC communication otherwise commences due to close proximity, then the controller **34** determines that it is to receive digital content data from the electronic device **41.** However, it should be noted that this order may be reversed in some embodiments.

In the above-described example, the mobile device **31** (the transmitting device) is oriented generally upward, and the mobile device **41** (the receiving device) is oriented generally downward with respect to the Z-axis. Using an accelerometer which includes Z-axis measurement, a positive reading, for example, of approximately +1g, indicates the mobile device is pointing upward, while a negative reading, for example, of approximately -1g, indicates the mobile device is upside down. In other embodiments, various orientations and/or pairs of orientations may be used in the determination of the direction of communication. For example, orientations including vertical, facing away or facing toward the device operator, top up or top down etc. may be contemplated. By way of example, one device may be substantially vertical with is display facing user A, while the other device is substantially horizontal, with its display facing up so that user B can still see the display. In another example embodiment, one device may be in a portrait orientation (with its display facing user A), while the other device is in a landscape orientation (with its display facing user B). In accordance with another example embodiment, one device may be substantially vertical with its display facing user A, while another device is substantially vertical with its display facing user B, but upside down. It should also be noted that in some embodiments, more than two devices may be used.

Pre-selection of data qualified to transmit via NFC communications may be a precondition of data exchange in some embodiments. For example, a business card (e.g., a personal address book contact) for the mobile device **31** owner may be pre-selected as enabled for communication via NFC, while the remainder of the address book would not be pre-selected or designated for communication. In this way, the business card may be a "default" file that is automatically transferred to a different mobile device upon movement of a given mobile device to initiate NFC communications.

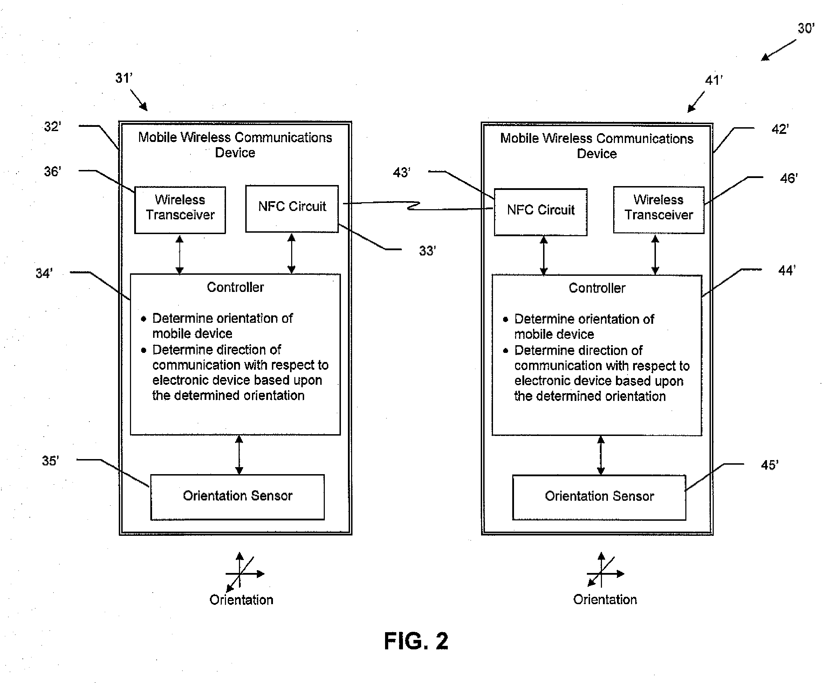

Referring additionally to FIG. 2, in this example the electronic device **41'** is also a mobile device similar to the mobile device **31'.** Here both of the mobile devices **31', 41'** have NFC circuits **33', 43'** and further include an orientation sensor **35', 45'** (such as an accelerometer) carried by their portable housings **32', 42'** and coupled to their controllers **34', 44',** respectively. As such, the controllers **34', 44'** may advantageously use the accelerometers **35', 45'** to determine the respective orientation of the mobile devices **31', 41'.**

It should be noted that in some embodiments the orientation of a mobile device may be determined or detected by a component other than an accelerometer. For example, this may be done based upon movement detected from an optical sensor (e.g., a charge-coupled device (CCD)), gyroscope, magnetometer/compass, etc.

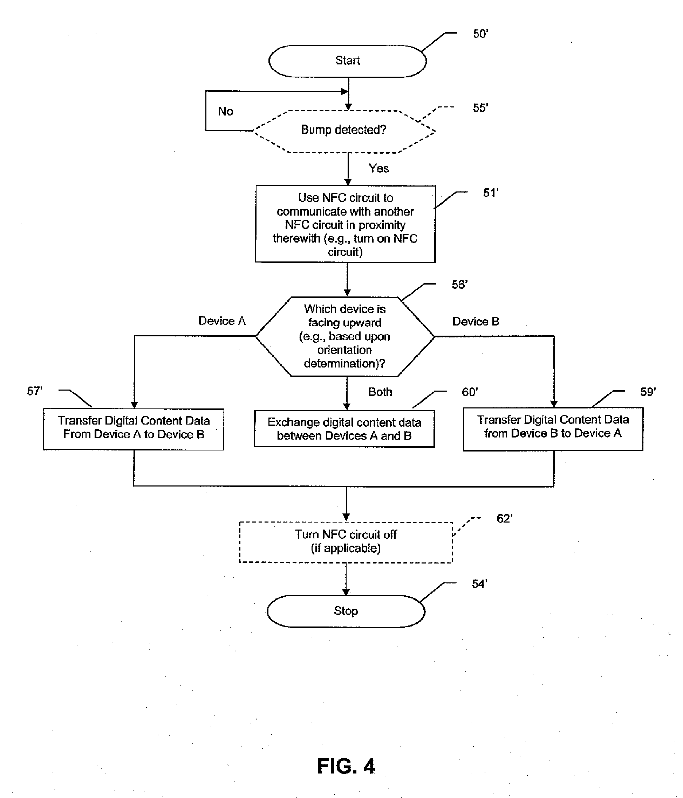

Referring additionally to the flowchart of FIG. 4, upon detection of the bump, at Block **55',** the NFC circuits **33', 43'** may begin communicating (e.g., they may be turned on or otherwise enabled for communication), at Block **51',** and the controllers **34', 44'** may advantageously determine whether their respective mobile devices **31', 41'** are facing upward, for example, at the time of the bump, at Block **56'.** In the case where the NFC circuits **33', 43'** are powered on or awakened from a sleep mode by the physical contact of the mobile devices **31', 41',** then these circuits may optionally be turned off or returned to a power-saving or sleep mode once NFC communications are complete, at Block **62'.**

It should be noted, however, that a bump or physical contact of the mobile devices **31', 41'** is not required in all embodiments. That is, the mobile devices **31', 41'** need not actually physically contact in all embodiments for NFC (or other short-range) communications to take place. As such, the triggering event for when to check for movement may be when NFC communications are first initiated (i.e., the NFC circuits **33', 43'** first come in range and begin communicating with one another), for example. For instance, one or both of the NFC circuits **33', 43'** may be operating in an active NFC mode and powered on prior to coming in proximity with each other, which will result in the detection of one another and commencement of NFC communication.

In the case wherein the mobile device **31'** has an upward orientation prior to the bump but the mobile device **41'** does not, the controller **34'** conveys its digital content data to the controller **44'** via the NFC circuit **33', 43',** at Blocks **56',** 57'. In the reverse case, i.e., wherein the mobile device **31'** does not have an upward orientation prior to the bump but the mobile device **41'** does, then the controller **44'** conveys its digital content data to the controller **34'** via the NFC circuits **33', 43',** at Block **59' .**

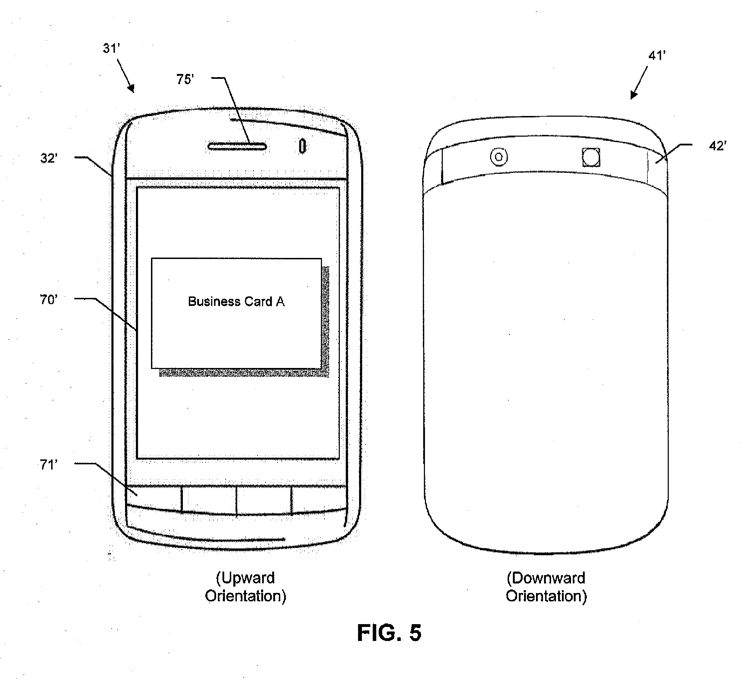

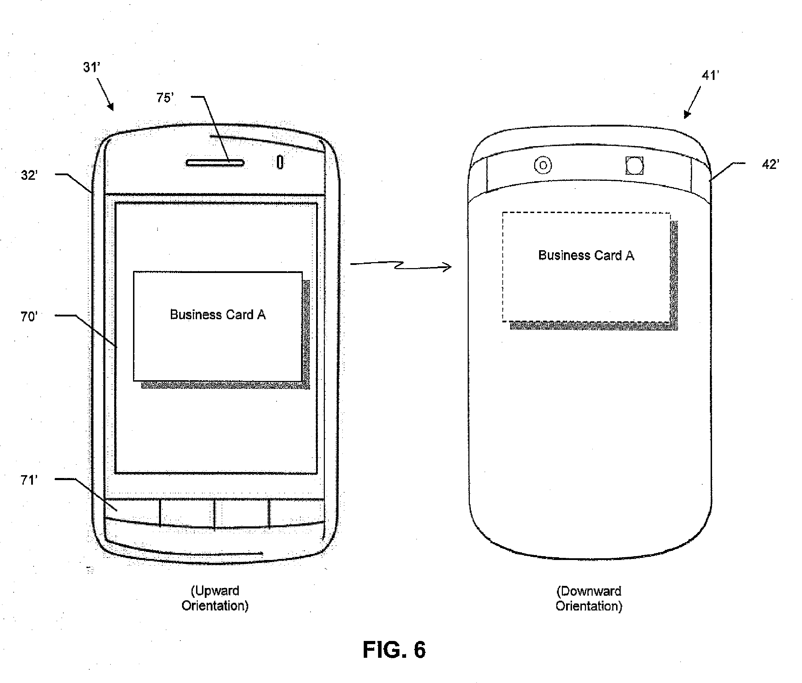

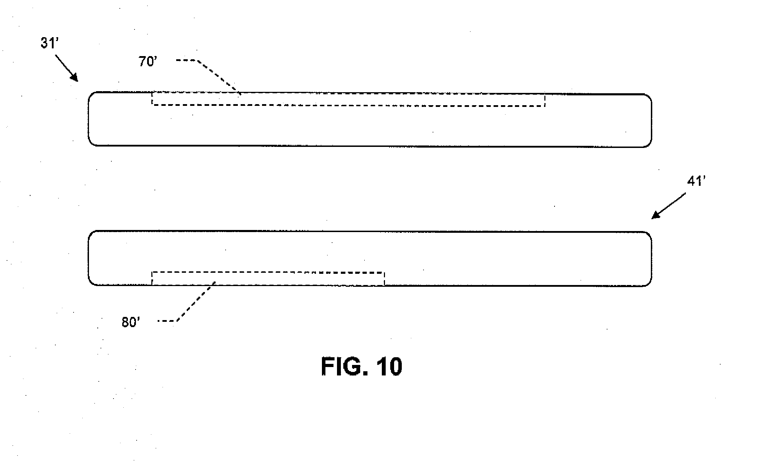

By way of example, in FIG. 5 the mobile device **31'** is schematically illustrated as facing upwardly relative to a mobile device **41'** (see also FIG. 10). In this example embodiment, the mobile device **31'** further includes a touch screen display **70',** input buttons **71',** and an audio output transducer **75',** all of which are carried by the housing **32'** and coupled to the controller **34'** Moreover, the mobile device **41'** illustratively includes a display **80',** a trackpad or track ball **82'** and a keypad **83'** (which serve as input devices), and an audio output transducer **85',** all of which are carried by the housing **42'** and coupled to the controller **44'.** In the example of FIG. 5, the mobile device **31'** is initially displaying a contact "business card" ("Business Card A") on the display **70'** prior to contact with the stationary mobile device **41'.** That is, displaying a digital content item (e.g., contact, image, etc.) on the display may designate that item for transfer upon movement of the mobile device **31'** into contact with the mobile device **41',** although in other embodiments content may be pre-selected for transfer via other approaches, as discussed above. Once the bump occurs, the controller **34'** transmits the business card to the controller **44',** as seen in FIG. 6. This transfer may be accomplished by the NFC circuits **33', 43',** or in some embodiments the transfer may be performed via a separate communications path, such as via the wireless transceivers **36', 46'** (e.g., Bluetooth, etc.).

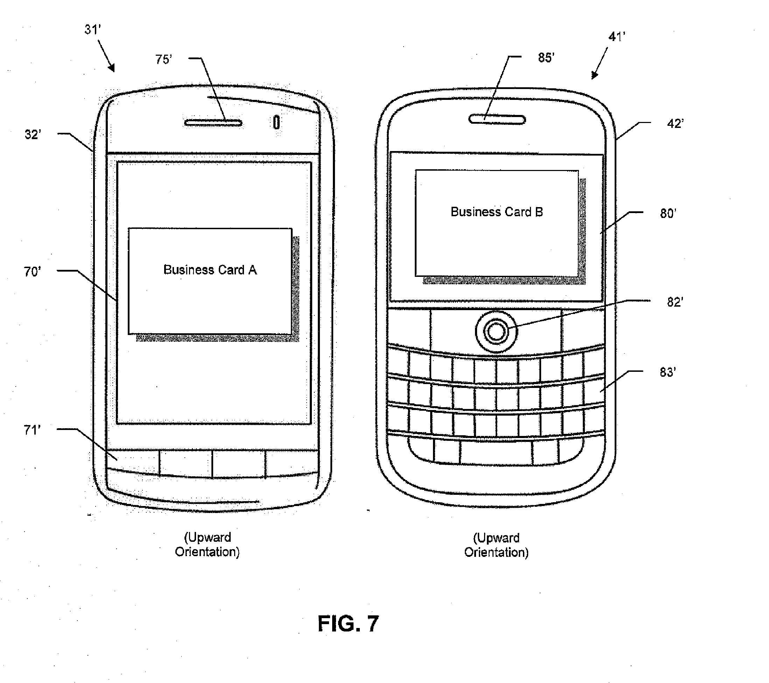

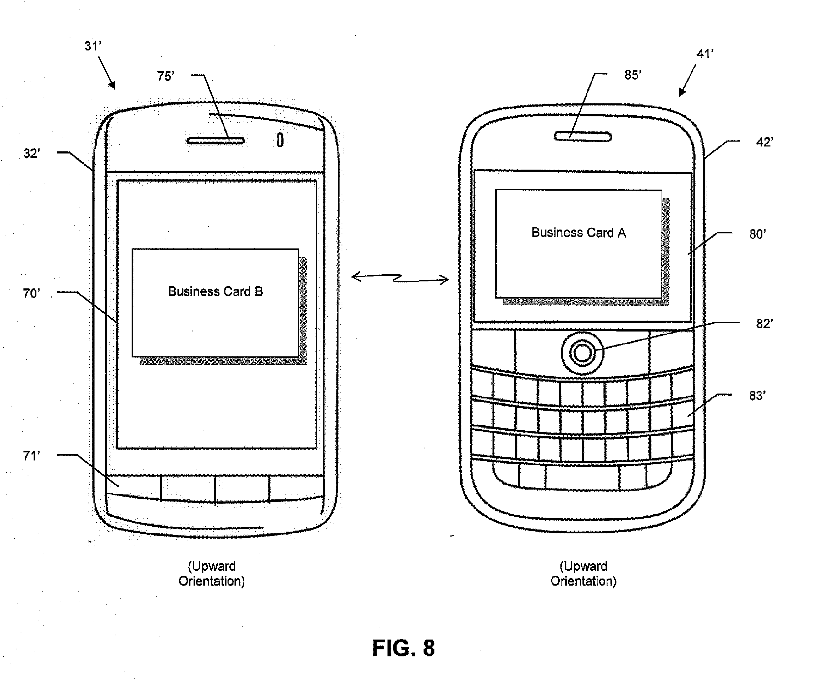

In the case where both mobile devices **31', 41'** are facing upwardly just prior to the bump (i.e., they bumped each other), then the controllers **33', 43'** exchange respective digital content data, at Block **60'.** An example implementation of this case is shown in FIGS. 7 and 8. As seen in FIG. 7, each of the mobile devices **31', 41'** is displaying a business card ("Business Card A", "Business Card B") on its respective display **70', 80'** and are schematically illustrated as facing upwardly relative to one another. After the bump occurs, the digital business cards are exchanged between the mobile devices **31', 41',** as seen in FIG. 8.

In the examples of FIGS. 5-8, both of the mobile devices **31', 41'** have orientation detection capabilities (i.e., the orientation sensors **35', 45').** However, referring again to FIG. 1, in some embodiments the electronic device **41** may be stationary or not have orientation detection capabilities. For example, the electronic device **41** may be a personal computer, etc., with NFC capabilities (e.g., an NFC peripheral) but no orientation detection capabilities. Yet, it may still be desirable to utilize the motion of the mobile device **31** to not only transmit digital content data to the electronic device **41,** but also to receive digital content data therefrom (or exchange digital content data therewith). These different operations may be invoked by using only the detected orientation of the mobile device **31** to signify a respective data transfer operation.

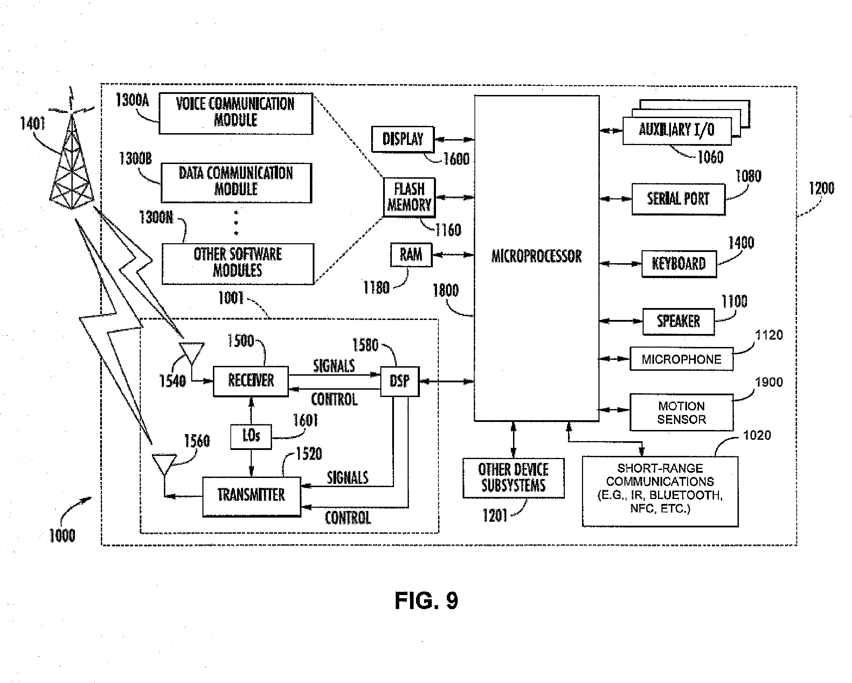

Example components of a mobile wireless communications device **1000** that may be used in accordance with the above-described embodiments are further described below with reference to FIG. 9. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communication system comprising:
at least one electronic device configured to wirelessly communicate via a Near-Field Communications (NFC) format; and
at least one mobile communications device comprising
an NFC device configured to wirelessly communicate with said at least one electronic device via the NFC format, and
a controller coupled with said NFC device, the controller being configured to
determine an orientation of said at least one mobile communications device, and
determine a direction of communication with respect to said at least one electronic device based upon the determined orientation.

2. The communication system of Claim 1 wherein said at least one mobile communications device further comprises an orientation detection sensor coupled with said controller; and wherein said controller is further configured to determine the orientation of said at least one mobile communications device based upon said orientation detection sensor.

3. The communication system of Claim 2 wherein said orientation detection sensor comprises at least one of an accelerometer, an optical sensor, a gyroscope or a magnetometer.

4. The communication system of Claim 1 wherein said controller is configured to cause said NFC device to transmit digital content data to said at least one electronic device based upon the determined orientation of said at least one mobile communications device.

5. The communication system of Claim 1 wherein said at least one mobile communications device further comprises a housing carrying said NFC device and said controller, and a display carried by the housing; and wherein said controller is configured to cause said NFC device to transmit digital content data to said at least one electronic device when the determined orientation of said at least one mobile communications device includes the display facing substantially upward.

6. The communication system of Claim 1 wherein said controller is configured to cause said NFC device to receive digital content data from said at least one electronic device based upon the determined orientation of said at least one mobile communications device.

7. The communication system of Claim 1 wherein said at least one mobile communications device further comprises a housing carrying said NFC device and said controller, and a display carried by the housing; and wherein said controller is configured to cause said NFC device to receive digital content data from said at least one electronic device when the determined orientation of said at least one mobile communications device includes the display facing substantially downward.

8. The communication system of Claim 1 wherein said at least one mobile communications device further comprises a housing carrying said NFC device and said controller; and wherein said controller is further configured to determine an impact to said housing, and to cause said NFC device to exchange
digital content data with said at least one electronic device based upon the determined impact to said housing.

9. A mobile communications device comprising:
a Near-Field Communication (NFC) device being configured to wirelessly communicate with at least one electronic device via an NFC format; and
a controller coupled with said NFC device, the controller being configured to
determine an orientation of the mobile communications device, and
determine a direction of communication with respect to the at least one electronic device based upon the determined orientation.

10. The mobile communications device of Claim 9 further comprising an orientation detection sensor coupled with said controller; and wherein said controller is further configured to determine the orientation of said at least one mobile communications device based upon said orientation detection sensor.

11. The mobile communications device of Claim 9
wherein said controller is configured to cause said NFC device to transmit digital content data to said at least one electronic device based upon a first determined orientation of said at least one mobile communications device, and to cause said NFC device to receive digital content data from said at least one electronic device based upon a second determined orientation of said at least one mobile communications device, the first determined orientation being different from the second determined orientation.

12. A communication method for at least one electronic device configured to wirelessly communicate via a Near-Field Communication (NFC) format, and at least one mobile communications device comprising an NFC device configured to wirelessly communicate with the at least one electronic device via the NFC format, the method comprising:
determining an orientation of the at least one mobile communications device; and
determining a direction of communication with respect to the at least one electronic device based upon the determined orientation.

13. The communication method of Claim 12 wherein the at least one mobile communications device further comprises a controller coupled with the NFC device and an orientation detection sensor coupled with the controller; and wherein determining the orientation comprises using the controller to determine the orientation of the at least one mobile communications device based upon the orientation detection sensor.

14. The communication method of Claim 12 further comprising transmitting digital content data from the at least one mobile communications device to the at least one electronic device based upon a first determined orientation of the at least one mobile communications device, and receiving digital content data at the at least one mobile communications device from the at least one electronic device based upon a second determined orientation of the at least one mobile communications device, the first determined orientation being different from the second determined orientation.

15. The communication method of Claim 12 wherein the at least one mobile communications device further comprises a housing carrying the NFC communications device and the controller; and the method further comprising determining an impact to the housing, and wherein determining the direction of communication further comprises determining the direction of communication with respect to the at least one electronic device also based upon the determined impact to the housing.

## Amended claims

### Amended claims in accordance with Rule 137(2) EPC.

**1.** A communication system (30) comprising:
at least one electronic device (41) comprising a first display (80') and configured to wirelessly communicate via a Near-Field Communications NFC" format; and
at least one mobile communications device (31) comprising
an NFC device (33) configured to wirelessly communicate with said at least one electronic device via the NFC format,
a second display (70'), and
a controller (34) coupled with said NFC device and said second display, the controller being configured to
determine the direction said second display is facing, and
determine whether to transfer data to, receive data from, or exchange data with respect to said at least one electronic device based upon the determined direction said second display is facing.

**2.** The communication system (30') of Claim 1 wherein said at least one mobile communications device (31') further comprises an orientation detection sensor (35') coupled with said controller (34'); and wherein said controller is further configured to determine the direction said second display (70') is facing based upon said orientation detection sensor.

**3.** The communication system (30') of Claim 2 wherein said orientation detection sensor comprises at least one of an accelerometer, an optical sensor, a gyroscope or a magnetometer.

**4.** The communication system (30) of Claim 1 wherein said controller (34) is configured to cause said NFC device (33) to transmit digital content data to said at least one electronic device (41) based upon the determined direction of said second display (70') facing away from an operator of said at least one mobile communications device.

**5.** The communication system (30) of Claim 1 wherein said at least one mobile communications device (31) further comprises a housing (32) carrying said NFC device (33), said second display (70') and said controller (34); and wherein said controller is configured to cause said NFC device to transmit digital content data to said at least one electronic device (41) when the second display is facing substantially upward.

**6.** The communication system (30) of Claim 1 wherein said controller is configured to cause said NFC device to receive digital content data from said at least one electronic device based upon the determined direction of said first display facing toward an operator of said at least one mobile communications device.

**7.** The communication system (30) of Claim 1 wherein said at least one mobile communications device (31) further comprises a housing (32) carrying said NFC device (33), said second display (70') and said controller (34); and wherein said controller is configured to cause said NFC device to receive digital content data from said at least one electronic device (41) when the second display is facing substantially downward.

**8.** The communication system (30) of Claim 1 wherein said at least one mobile communications device (31) further comprises a housing (32) carrying said NFC device, said second display (70') and said controller (34); and wherein said controller is further configured to determine an impact to said housing, and to cause said NFC device to exchange digital content data with said at least one electronic device (41) based upon the determined impact to said housing.

**9.** A mobile communications device comprising:
a Near-Field Communication "NFC" device being configured to wirelessly communicate with at least one electronic device via an NFC format;
a display; and
a controller coupled with said NFC device and said display, the controller being configured to
determine the direction said display is facing, and
determine whether to transfer data to, receive data from, or exchange data with respect to the at least one electronic device based upon the determined direction said display is facing.

**10.** The mobile communications device of Claim 9 further comprising an orientation detection sensor coupled with said controller; and wherein said controller is further configured to determine the direction said display is facing based upon said orientation detection sensor.

**11.** The mobile communications device of Claim 9 wherein said controller is configured to cause said NFC device to transmit digital content data to said at least one electronic device based upon a first determined direction said display is facing, and to cause said NFC device to receive digital content data from said at least one electronic device based upon a second determined direction said display is facing, the first determined direction being different from the second determined direction.

**12.** A communication method for at least one electronic device configured to wirelessly communicate via a Near-Field Communication NFC" format, and at least one mobile communications device comprising an NFC device configured to wirelessly communicate with the at least one electronic device via the NFC format and a display, the method comprising:
determining the direction said display is facing; and
determining whether to transfer data to, receive data from, or exchange data with respect to the at least one electronic device based upon the determined direction said display is facing.

**13.** The communication method of Claim 12 wherein the at least one mobile communications device further comprises a controller coupled with the NFC device and an orientation detection sensor coupled with the controller; and wherein determining the direction the display is facing comprises using the controller to determine the direction the display is facing based upon the orientation detection sensor.

**14.** The communication method of Claim 12 further comprising transmitting digital content data from the at least one mobile communications device to the at least one electronic device based upon a first determined direction the display is facing, and receiving digital content data at the at least one mobile communications device from the at least one electronic device based upon a second determined direction the display is facing, the first determined direction being different from the second determined direction.

**15.** The communication method of Claim 12 wherein the at least one mobile communications device further comprises a housing carrying the NFC communications device, the display and the controller; and the method further comprising determining an impact to the housing, and wherein determining whether to transfer data to, receive data from, or exchange data further comprises determining whether to transfer data to, receive data from, or exchange data also based upon the determined impact to the housing.
